(19) Europäisches Patentamt

European Patent Office

Office européen des brevets

(11) Veröffentlichungsnummer : **0 514 560 B1**

(12) **EUROPÄISCHE PATENTSCHRIFT**

(45) Veröffentlichungstag der Patentschrift :
**10.11.93 Patentblatt 93/45**

(21) Anmeldenummer : **91108030.7**

(22) Anmeldetag : **17.05.91**

(51) Int. Cl.⁵ : **C08J 3/26, // C08L21/02**

(54) **Verfahren zur Vorvernetzung von Naturkautschuk und Synthesekautschuk und Verfahren zur Herstellung von Gummiartikeln.**

(43) Veröffentlichungstag der Anmeldung :
**25.11.92 Patentblatt 92/48**

(45) Bekanntmachung des Hinweises auf die
Patenterteilung :
**10.11.93 Patentblatt 93/45**

(84) Benannte Vertragsstaaten :
**AT DE FR GB IT NL**

(56) Entgegenhaltungen :
**GB-A- 696 404**
**JOURNAL OF APPLIED POLYMER SCIENCE.
& 10, November 1990, NEW YORK US pages
1627 - 1636; N.R. PEETHAMBARAN ET AL.:
'EFFECT OF PREVULCANISATION OF NATU-
RAL RUBBER LATEX ON THE CHEMICAL AND
PHYSICAL PROPERTIES OF LATEX THREAD'**

(73) Patentinhaber : **Semperit Aktiengesellschaft
Holding
Modecenterstrasse 22
A-1031 Wien (AT)**

(72) Erfinder : **Wukovnig, Siegfried
Johann Bauer-Strasse 22/8
A-2632 Wimpassing (AT)**

(74) Vertreter : **Müller, Hans-Jürgen
Patentanwälte, Dipl.-Ing. Hans-Jürgen Müller,
Dipl.-Chem.Dr. Gerhard Schupfner, Dipl.-Ing.
Hans-Peter Gauger, Postfach 101161
D-80085 München (DE)**

## Beschreibung

Die Erfindung betrifft ein Verfahren zur Schwefelvorvernetzung von Naturkautschuk und Synthesekautschuk in wässrigen Lösungen und zur Herstellung von Gummiartikeln aus nach diesem Verfahren vorvernetztem Latex.

Bekannt sind Verfahren, bei denen der Naturkautschuk- bzw. Synthesekautschuklatex mittels Schwefelvernetzung vorvulkanisiert wird. Hierbei wird das Vernetzungssystem in Form einer Suspension in den zu vernetzenden Latex eingebracht. Die verwendeten Dispersionen bestehen üblicherweise aus fein vermahlenem Schwefel, Zinkoxid bzw. Zinkkarbonat und wasserunlöslichen Beschleunigern (z.B. Zinkdithiocarbamate, Zinkmerkaptobenzothiazol u.a.), welche nach Zugabe von Netzmitteln in Wasser aufgeschlämmt werden. Dieses klassische Verfahren hat folgende Nachteile:

- Abhängigkeit der Vernetzungsgeschwindigkeit vom Vermahlungsgrad der Dispersion;
- Schwierigkeiten bei der Einstellung eines definierten Vorvernetzungsgrades, da aufgrund des heterogenen Systems die Vernetzungsreaktion auch nach der sogenannten Reifezeit noch abläuft und eine dauernde Nachvernetzung bewirkt (sogenannte Alterung);
- um eine Langzeitlagerfähigkeit von vorvernetztem Latex zu erhalten, müssen die zur Schwefelvernetzung verwendeten Dispersionen nach Durchführung der Vorvernetzung (Reifung) durch aufwendige Verfahren (z.B. Zentrifugieren) entfernt werden. Probleme bei der Verarbeitung des Latex aufgrund der Alterung der Latexmischung und durch Sedimentation der Vernetzungsdispersion.

Die Erfindung hat es sich zur Aufgabe gemacht, die genannten Nachteile bei der Schwefelvernetzung von Natur- und Synthesekautschuklatex (Dien-Kautschuke z.B. SBR, NBR,..) und bei der anschließenden Verarbeitung des Latex in formgebenden Prozeßschritten zu eliminieren.

Die Erfindung ist im Patentanspruch 1 gekennzeichnet.

Gegenstand der Erfindung ist ein Verfahren zur Schwefelvorvernetzung von Synthese- oder Naturkautschuk,

**dadurch gekennzeichnet,**

daß das aus durchwegs wasserlöslichen Bestandteilen bestehende Vernetzungssystem in Form von wässrigen Lösungen dem Latex zugesetzt wird, wobei der erreichte Vernetzungsgrad (bestimmt durch die Quellung des getrockneten Kautschukfilms in Toluol nach Murray) 20 bis 200 % beträgt.

In den Unteransprüchen sind besondere Ausbildungen der Erfindung beansprucht. Danach wird das Vernetzungssystem zum Latex nicht mehr in Form einer Dispersion, sondern gemäß der Erfindung in Form wässriger Lösungen zugesetzt.

So werden beispielsweise Schwefel durch wasserlösliche Polysulfide und beispielsweise Zinkoxid durch lösliche Zinkaminkomplexe ersetzt.

Die Beschleuniger können beispielsweise in Form von wasserlöslichen Alkali- bzw. Ammonium-Dithiocarbamaten, Xanthogenaten, u.a. zugegeben werden.

Nach entsprechender Reaktionszeit, zu deren Abkürzung die Latexmischung auch erwärmt werden kann, wird ein vorvernetzter Latex erhalten. Den Vernetzungsgrade kann man durch Messung der Quellung des getrockneten Kautschukfilms analog der von F.J. Murray in Naturkautschuktechnologie 13, Teil 2 (1982), S. 31-32, beschriebenen Methode in einem geeigneten Lösungsmittel, wie Toluol, bestimmen (%). Je nach Vernetzungssystem und Menge erhält man Quellungsgrade zwischen 20% und 200%.

Gummiartikel werden dann aus Latex, welcher nach dem obig beschriebenen Verfahren vorvernetzt wurde, hergestellt.

A. Beispiele zur Vorvernetzung des Latex

Erfindungsgemäß wird die Schwefelvorvernetzung von Latex durchgeführt, indem dem Latex wässrige Lösungen von beispiels weise Polysulfiden, Beschleunigern und Zinkaminkomplexen sowie geeignete Stabilisatoren zugegeben werden. Anschließend wird der Latex über mehrere Tage stehen gelassen bzw. zur Erhöhung der Reaktionsgeschwindigkeit kurzzeitig erwärmt. Als Beispiele seien die beiden nachfolgenden Rezepturen erwähnt:

Beispiel 1

| | Gew.teile |
|---|---|
| NK-Latex (bezogen auf Trockensubstanz) | 100 |
| $Na_2S_5$ | 0,8 |
| Natriumdibutylthiocarbamat | 0,25 |
| Kaliumlaurat | 0,8 |
| $ZnCl_2$ | 0,73 |
| $NH_3$ | 1 |
| $H_2O$ | 0 |

Die angeführte Latexmischung läßt man unter Rühren 6h bei 50°C reagieren, sie wird anschließend abgekühlt. Die durch Lagerung in Toluol nach Murray bestimmte Quellung beträgt 80 %.

Beispiel 2

| | Gew.teile |
|---|---|
| NK-Latex | 100 |
| $Na_2S_4$ | 0,9 |
| Natriummerkaptobenzothiazolat | 0,5 |
| Natriumdibutyldithiocarbamat | 0,5 |
| Thioharnstoff | 0,25 |
| Kaliumlaurat | 0,5 |
| $Zn(NO_3)_2 \cdot 6H_2O$ | 1,5 |
| $NH_3$ | 1 |
| $H_2O$ | 0 |

Die beschriebene Latexmischung läßt man einige Tage bei Raumtemperatur stehen. Der Quellungsgrad (nach Murray) in Toluol beträgt 80 %.

Der in beschriebener Art vorvernetzte Latex kann nach Zugabe entsprechender Antioxidanten, Antiwebbingemulsionen, Stabilisatoren, Alterungsschutzmittel, Weichmacher, Füllstoffe u.a. in formgebenden Prozeßschritten weiter verarbeitet werden.

Erfindungsgemäß können die nach obigem Verfahren vorvernetzten Latexmischungen in Tauchverfahren mit und ohne Koagulationsmittel, in Gieß- und Sprühverfahren, in Schäumverfahren, in Spinn- und in Beschichtungsverfahren verarbeitet werden. Der nach dem neuen Verfahren vorvernetzte Latex hat den Vorteil, daß im Gegensatz zum traditionellen Reife-Verfahren überraschenderweise keine Sedimentation von Vulkanisationsagentien auftritt, so daß eine bessere Lagerstabilität gewährleistet ist. Dadurch werden die zulässigen Latexmischungsstandzeiten in den verarbeitenden Prozeßschritten erhöht sowie wesentlich konstantere Fertigungsbedingungen garantiert. Ein wesentlicher Vorteil gegenüber dem bisher verwendeten Verfahren besteht auch darin, daß der Vernetzungsgrad konstant bleibt und sich bei Lagerung bzw. Verwendung nicht mehr verändert.

Soll ein über viele Monate lagerbarer vorvernetzter Latex hergestellt werden, so muß bei einer Schwefelvorvernetzung nach heutigem Stand der Technik das überschüssige Vulkanisationssystem (z.B. dispergierter Schwefel, Zinkoxide und feste Beschleuniger) nach dem Vorvernetzungsschritt entfernt werden. Hierzu finden heute insbesondere technisch aufwendige Zentrifugationsverfahren Anwendung (z.B. Revultex-Latextypen).

Diese Abtrennung bzw. Desaktivierung der überschüssigen, festen Vulkanisationsagentien aus dem vorvernetzten Latex entfällt aber bei dem neuen Vorvernetzungsverfahren.

B. Beispiele für die Weiterverarbeitung

Nachstehend einige Beispiele für die Verarbeitung der erfindungsgemäß hergestellten vorvernetzten Mischung:

Beispiel 1:

```
Für die Herstellung von Produkten (z.B. Handschuhe, Kondome)
im Koagulationstauchverfahren wird erfindungsgemäß folgende
Mischung verwendet: vorvernetzter Natur- oder Syntheselatex
                             100 Gewichtsteile (Trockengehalt)
(bezogen auf reinen Kautschuktrockengehalt)
Antioxidant                  1    bis 2 Gewichtsteile
Antiwebbingemulsion          0,01 bis 1 Gewichtsteile
Stabilisatoren               0,01 bis 1 Gewichtsteile
mit deionisiertem Wasser auf 50 Gewichtsteile auffüllen.
Als Koagulant verwendet man beispielsweise:
100 Gewichtsteile           Ethanol
0,5 bis 10,0 Gewichtsteile  Ca(NO3)2
0,5 bis 1,0 Gewichtsteile   nichtionogenes Netzmittel
```

Die vorgewärmten Formen werden zuerst in das Koagulantbad getaucht, zwischengetrocknet, und dann in die o.a. Latexmischung getaucht. Die mit Latex beschichteten Formen werden zwischen 70 und 120 °C getrocknet, vulkanisiert, und anschließend werden die fertigen Gegenstände von der Form abgezogen.

Beispiel 2

Für das Gießverfahren und Streichverfahren wird folgendes Bad angesetzt:

```
Vorvernetzter Natur- bzw. Syntheselatex 100 Gewichtsteile
(Trockengehalt)
(auf Kautschuktrockengehalt bezogen)
Antioxidant                          1  - 2 Gewichtsteile

Stabilisatoren                       0,5 - 2 Gewichtsteile
Füllstoffe (z.B. Kreide)             10 - 25 Gewichtsteile
```

Die Viskositätseinstellung erfolgt mit Wasser oder 20 %-iger Ammonkaseinatlösung auf 18 bis 30 S bei 180°C, mit Fordbecher Nr. 4 gemessen. Die mit Latex gestrichenen Gegenstände werden bei 70 - 130°C getrocknet, vulkanisiert und weiterverarbeitet.

Beispiel 4

Für das Sprühverfahren wird folgende Mischung angesetzt:

```
Ein erfindungsgemäß vorvernetzter Synthese- oder Naturlatex
                                      100 Gewichtsteile (Trockengehalt)
Kaliumcaprylat                    0,5 - 1 Gewichtsteile
Stabilisator (nichtionogen) 0,2 - 1 Gewichtsteile
```

Der Trockengehalt wird auf 20 bis 40 % mit deionisiertem Wasser eingestellt. Die mit Latex aufgesprühte Ware wird bei 60 - 100°C getrocknet und weiterverarbeitet.

Beispiel 5

Für das Schäumen wird folgende Mischung hergestellt:

```
Ein erfindungsgemäß vorvernetzter Synthese- oder Naturlatex
                                      100 Gewichtsteile (Trockengehalt)
(auf Kautschuktrockengehalt berechnet)
nichtiogene Stabilisatoren      2   - 3 Gewichtsteile
Seifen                        0,7 - 2 Gewichtsteile
Alterungsschutzmittel           1   - 3 Gewichtsteile
Natriumsilicofluorid            3   - 9 Gewichtsteile
(Fixierung)
```

Die latexgeschäumten Gegenstände werden bei 70 - 120°C getrocknet und weiterverarbeitet.

Beispiel 6

Für das Spinnverfahren wird folgende Mischung angesetzt:

```
Ein erfindungsgemäß vorvernetzter Naturlatex
                                100 Gewichtsteile
(Trockengehalt)
Alterungsschutzmittel           1   - 2 Gewichtsteile
nichtionogene Stabilisatoren 0,1 - 1 Gewichtsteile
```

Der Trockensubstanzgehalt wird mit Wasser auf 55 bis 50 % eingestellt. Die vorbereitete Latexmischung wird durch eine Kapillare in ein 5 -10 % Essigsäure enthaltendes Koagulationsbad unter leichtem Druck zugeleitet. Der verfestigte Faden wird mit fließendem Wasser gewaschen und bei 50 - 80°C langsam getrocknet.

Beispiel 7

Für das Beschichten wird folgendes Bad angesetzt:

**Ein erfindungsgemäß vorvernetzter Naturlatex**

| | 100 Gewichtsteile |
|---|---|
| (berechnet auf Naturkautschuktrockengehalt) | |
| Antioxidant | 1 – 2 Gewichtsteile |
| Natriumbentonit (Füllstoff) | 30 – 60 Gewichtsteile |
| Kreide (Füllstoff) | 30 – 60 Gewichtsteile |
| Paraffinemulsion (Weichmacher) | 5 – 15 Gewichtsteile |
| Stabilisator | 2 – 10 Gewichtsteile |

Der Vernetzungsgrad von erfindungsgemäß vorvernetztem Syntheselatex wird analog nach Murray bestimmt, es muß jedoch das Quellmedium dem Polymer angepaßt werden. Beispielsweise kann der Vernetzungsgrad von Polyacrylnitrilbutadiencopolymerlatex durch Bestimmung der Quellung des getrockneten Films in Methylethylketon bestimmt werden.

Der erfindungsgemäß hergestellte vorvernetzte Latex ist je nach Rezeptur Monate bis Jahre ohne große Veränderungen des Vernetzungsgrades lagerfähig. Damit ergibt sich die Möglichkeit der Herstellung entsprechend vorvernetzter Latextypen ohne den zur Zeit unumgänglichen Verfahrensschritt der Abtrennung bzw. Desaktivierung der Vulkanisationsagentien (z.B. durch Zentrifugation).

Bei der Verarbeitung von im neuen Verfahren hergestellten Latexmischungen ergibt sich der Vorteil, daß keine Sedimentation von Vulkanisationsagentien auftritt und dadurch die Standzeit des vorvernetzten Latex im Prozeß erhöht wird.

**Patentansprüche**

1.  Verfahren zur Schwefelvorvernetzung von Synthese- oder Naturkautschuk, **dadurch gekennzeichnet,** daß das aus durchwegs wasserlöslichen Bestandteilen bestehende Vernetzungssystem in Form von wässrigen Lösungen dem Latex zugesetzt wird, wobei der erreichte Vernetzungsgrad (bestimmt durch die Quellung des getrockneten Kautschukfilms in Toluol nach Murray) 20 bis 200 % beträgt.

2.  Verfahren nach Anspruch 1, dadurch gekennzeichnet, daß Schwefel in Form von wasserlöslichen Polysulfiden zur Durchführung der Schwefelvorvernetzung von Latex eingesetzt wird.

3.  Verfahren nach Anspruch 1, dadurch gekennzeichnet, daß Zink in Form von wasserlöslichen Zinksalzen, z.B. Zinkaminkomplexen, als Aktivator zur Schwefelvorvernetzung von Latex verwendet wird.

4.  Verfahren nach Anspruch 1, dadurch gekennzeichnet, daß nur wasserlösliche Beschleuniger, z.B. Thioharnstoffe, Alkali-Dithiocarbamate, -Merkaptobenzothiazolate, -Xanthogenate, dem Latex zugesetzt werden.

5.  Verfahren zur Herstellung von Produkten aus Latex, dadurch gekennzeichnet, daß Latexmischungen, vorvernetzt nach Anspruch 1 bis 4 verwendet werden.

6.  Verfahren nach Anspruch 5, dadurch gekennzeichnet, daß für das Tauchverfahren vorgewärmte Formen in ein Koagulationsbad und anschließend in ein Bad, bestehend aus 100 Gewichtsteilen (Trockensubstanz) eines nach Anspruch 1 bis 4 vorvernetzten Latex, Antioxidant: 0 bis 5 Gewichtsteile, Antiwebbingemulsion: 0 bis 3 Gewichtsteile, Stabilisatoren: bis 10 Gewichtsteile, Weichmacheremulsion: 0 bis 20 Gewichtsteile und deionisiertem Wasser zur Feststoffgehalteinstellung auf 15 - 60 % Feststoffgehalt, getaucht und die mit dem Latex beschichteten Formen bei Temperaturen von 20 bis 300°C getrocknet werden, der Gummifilm von der Form entfernt und in bekannter Weise weiterverarbeitet wird.

7.  Verfahren nach Anspruch 6, dadurch gekennzeichnet, daß für das Tauchverfahren vorgewärmte Formen in ein Bad, bestehend aus 100 Gewichtsteilen nach Anspruch 1 bis 4 vorvernetztem Latex, berechnet auf reinem Kautschuktrockengehalt, Antioxidant: 0 bis 4 Gewichtsteile, Stabilisator: 0 bis 3 Gewichtsteile, deionisiertes Wasser auf 20 bis 60 % Trockengehalt von Kautschuk, mit geeignetem Viskositätsregler auf Viskosität 15 bis 30 S mit Fordbecher Nr. 4 bei 18°C eingestellt, getaucht und die Formen mit dem Latex bei Temperaturen von 20 bis 300°C getrocknet werden und daß der Gummifilm von der Form entfernt und in bekannter Weise das Latexprodukt weiterverarbeitet wird.

8. Verfahren nach Anspruch 5, dadurch gekennzeichnet, daß für das Gießverfahren eine Mischung, bestehend aus 100 Gewichtsteilen nach Anspruch 1 bis 4 vorvernetztem Latex, berechnet aus reinem kautschuktrockengehalt, Antioxidant: bis 4 Gewichtsteile, Stabilisatoren: bis 5 Gewichtsteile, Füllstoffe: 5 bis 60 Gewichtsteile, die Viskosität eingestellt mit Wasser oder geeignetem Viskositätsregler auf 13 bis 40 S mit Fordbecher Nr. 4 bei 18°C gemessen, in die Formen gegossen, bei 20 bis 300°C getrocknet, aus der Form entfernt und in bekannter Weise weiterverarbeitet wird.

9. Verfahren nach Anspruch 5, dadurch gekennzeichnet, daß für das Sprühverfahren eine Mischung, bestehend aus 100 Gewichtsteilen nach Anspruch 1 bis 4 vorvernetztem Latex, berechnet aus reinem Kautschuktrockengehalt, ionogenen Stabilisatoren: bis 5,0 Gewichtsteile, nichtionogenen Stabilisatoren: 0 bis 5 Gewichtsteile, der Trockengehalt auf 10 bis 60% mit deionisiertem Wasser eingestellt, verwendet wird und daß die mit Latex aufgesprühten Produkte bei 20 bis 300°C getrocknet und in bekannter Weise weiterverarbeitet werden.

10. Verfahren nach Anspruch 5, dadurch gekennzeichnet, daß für das Schäumverfahren eine Mischung, bestehend aus 100 Gewichtsteilen nach Anspruch 1 bis 4 vorvernetztem Latex, berechnet aus reinen Kautschuktrockengehalt, nicht ionogene Stabilisatoren: bis 5 Gewichtsteile, Seifen. 0,05 bis 6 Gewichtsteile, Alterungsschutzmittel: bis 4 Gewichtsteile, Schaumstabilisatoren: 0,1 bis 15 Gewichtsteile, in bekannter Weise geschäumt und bei 20 bis 300°C getrocknet wird und daß die Produkte in bekannter Weise weiterverarbeitet werden.

11. Verfahren nach Anspruch 5, dadurch gekennzeichnet, daß für das Spinnverfahren eine Mischung, bestehend aus 100 Gewichtsteilen nach Anspruch 1 bis 4 vorvernetztem Latex, berechnet auf reinem Kautschuktrockengehalt, Alterungsschutzmittel: bis 5 Gewichtsteile, Stabilisatoren: bis 3 Gewichtsteile, wonach der Trockensubstanzgehalt mit Wasser auf 30 bis 70 % eingestellt ist, verwendet und die Latexmischung über eine Kapillare in ein Koagulationsbad geleitet und in bekannter Weise gewaschen und getrocknet wird.

12. Verfahren nach Anspruch 5, dadurch gekennzeichnet, daß für das Beschichten eine Mischung, bestehend aus 100 Gewichtsteilen nach Anspruch 1 bis 4 vorvernetztem latex, berechnet auf reinen Kautschuktrockengehalt, Antioxidant: bis 4 Gewichtsteile, Füllstoffe: 20 bis 300 Gewichtsteile, Weichmacher: bis 20 Gewichtsteile, Stabilisatoren: bis 15 Gewichtsteile sowie Wasser zur Einstellung des Trockengehaltes verwendet und bei 20 bis 300°C getrocknet wird und daß die beschichteten Produkte in bekannter Weise weiterverarbeitet werden.

## Claims

1. Method for pre-crosslinking synthetic or natural rubber with sulphur, characterised in that the crosslinking system consisting exclusively of water-soluble components in the form of aqueous solutions is added to the latex and the degree of crosslinking achieved (determined by the swelling of the dried film of rubber in toluene according to Murray) is 20 to 200%.

2. Method according to claim 1, characterised in that sulphur in the form of water-soluble polysulphides is used to carry out the pre-crosslinking of latex with sulphur.

3. Method according to claim 1, characterised in that zinc in the form of water-soluble zinc salts, e.g. zinc amine complexes, is used as activator for the pre-crosslinking of latex with sulphur.

4. Method according to claim 1, characterised in that only water-soluble accelerators, e.g. thioureas, alkali dithiocarbamates, mercaptobenzothiazolates, xanthogenates, are added to the latex.

5. Method for producing products from latex, characterised in that latex mixtures are used pre-crosslinked according to claims 1 to 4.

7

6. Method according to claim 5, characterised in that for the dipping method pre-heated forms are dipped in a coagulation bath and then in a bath consisting of 100 parts by weight (dry substance) of a latex pre-crosslinked according to claims 1 to 4, 0 to 5 parts by weight of antioxidant, 0 to 3 parts by weight of anti-webbing emulsion, up to 10 parts by weight of stabilisers, 0 to 20 parts by weight of plasticiser emulsion and de-ionised water to set the solid content to 15 to 60% solid content, and the forms coated with the latex are dried at temperatures of 20 to 300°C, the film of rubber is removed from the form and processed further in a manner known per se.

7. Method according to claim 6, characterised in that for the dipping method pre-heated forms are dipped in a bath consisting of 100 parts by weight of latex pre-crosslinked according to claims 1 to 4, calculated on the basis of pure rubber dry content, 0 to 4 parts by weight of antioxidant, 0 to 3 parts by weight of stabiliser, de-ionised water to produce a rubber dry content of 20 to 60%, set with a suitable viscosity regulator to a viscosity of 15 to 30 S measured with Ford cup no. 4 at 18°C, and the forms with the latex are dried at temperatures of 20 to 300°C, and in that the film of rubber is removed from the form and the latex product is processed further in a manner known per se.

8. Method according to claim 5, characterised in that for the casting method a mixture consisting of 100 parts by weight of latex pre-crosslinked according to claims 1 to 4, calculated on the basis of pure rubber dry content, up to 4 parts by weight of antioxidant, up to 5 parts by weight of stabilisers, 5 to 60 parts by weight of fillers, the viscosity set with water or a suitable viscosity regulator to 13 to 40 S measured with Ford cup no. 4 at 18°C, is poured into the moulds, dried at 20 to 300°C, removed from the mould and processed further in a manner known per se.

9. Method according to claim 5, characterised in that for the spraying method a mixture is used consisting of 100 parts by weight of latex pre-crosslinked according to claims 1 to 4, calculated on the basis of pure rubber dry content, up to 5.0 parts by weight of ionogenic stabilisers, 0 to 5 parts by weight of non-ionogenic stabilisers, the dry content being set to 10 to 60% with de-ionised water, and in that the sprayed latex products are dried at 20 to 300°C and processed further in a manner known per se.

10. Method according to claim 5, characterised in that for the foaming method a mixture consisting of 100 parts by weight of latex pre-crosslinked according to claims 1 to 4, calculated on the basis of pure rubber dry content, up to 5 parts by weight of non-ionogenic stabilisers, 0.05 to 6 parts by weight of soap, up to 4 parts by weight of aging inhibitor, 0.1 to 15 parts by weight of foam stabilisers, is foamed in a manner known per se and dried at 20 to 300°C, and in that the products are processed further in a manner known per se.

11. Method according to claim 5, characterised in that for the spinning method a mixture is used consisting of 100 parts by weight of latex pre-crosslinked according to claims 1 to 4, calculated on the basis of pure rubber dry content, up to 5 parts by weight of aging inhibitor, up to 3 parts by weight of stabilisers, after which the dry substance content is set to 30 to 70% with water, and the latex mixture is passed via a capillary into a coagulation bath and washed and dried in a manner known per se.

12. Method according to claim 5, characterised in that for the coating method a mixture is used consisting of 100 parts by weight of latex pre-crosslinked according to claims 1 to 4, calculated on the basis of pure rubber dry content, up to 4 parts by weight of antioxidant, 20 to 300 parts by weight of fillers, up to 20 parts by weight of plasticiser, up to 15 parts by weight of stabilisers and water to set the dry content, and dried at 20 to 300°C, and in that the coated products are processed further in a manner known per se.

## Revendications

1. Procédé de prévulcanisation de caoutchouc synthétique ou naturel,
   caractérisé en ce que
   le système de vulcanisation qui est constitué par des composants solubles en totalité dans de l'eau est ajouté au latex sous forme de solutions aqueuses, le degré de vulcanisation atteint (déterminé par le gonflement du film de caoutchouc séché dans du toluène selon Murray) étant compris entre 20 et 200 %.

2. Procédé selon la revendication 1, caractérisé en ce que l'on utilise du soufre sous forme de polysulfures solubles dans l'eau pour réaliser la prévulcanisation du latex.

3. Procédé selon la revendication 1, caractérisé en ce que l'on utilise en tant qu'activateur pour la prévulcanisation au soufre du latex du zinc sous la forme de sels de zinc solubles dans l'eau, par exemple des aminocomplexes de zinc.

4. Procédé selon la revendication 1, caractérisé en ce que l'on n'ajoute au latex que des accélérants solubles dans l'eau, par exemple des thio-urées, des dithiocarbamates alcalins, des mercaptobenzothiazolates alcalins, des xanthogénates alcalins.

5. Procédé pour réaliser des produits en latex, caractérisé en ce que l'on utilise des mélanges de latex prévulcanisés selon les revendications 1 à 4.

6. Procédé selon la revendication 5, caractérisé en ce que pour le procédé par trempage on plonge des moules pré-chauffés dans un bain de coagulation et ensuite dans un bain constitué par 100 parties en poids (substances sèches) d'un latex prévulcanisé selon les revendications 1 à 4, 0 à 5 parties en poids d'antioxydant, 0 à 3 parties en poids d'émulsion anti-voile, jusqu'à 10 parties en poids de stabilisateurs, 0 à 20 parties en poids d'émulsion plastifiante, et de l'eau désionisante pour régler la teneur en solides sur une valeur de 15 à 60 %, et les moules enduits de latex sont séchés à des températures comprises entre 20 et 300°C, le film de caoutchouc est retiré du moule et soumis à un traitement subséquent d'une manière connue.

7. Procédé selon la revendication 6, caractérisé en ce que pour le procédé par trempage, on plonge les moules pré-chauffés dans un bain consistant en 100 parties en poids de latex prévulcanisé selon les revendications 1 à 4, calculées sur la teneur en caoutchouc sec pur, 0 à 4 parties en poids d'antioxydant, 0 à 3 parties en poids de stabilisateur, de l'eau désionisée à teneur en matières sèches de caoutchouc de 20 à 60 %, avec un régulateur de viscosité approprié pour une viscosité de 15 à 30 S avec un bécher de Ford No 4 à 18°C, et les moules sont séchés avec le latex à des températures comprises entre 20 et 300°C, en ce que le film de caoutchouc est retiré du moule et en ce que le produit en latex est soumis à un traitement subséquent d'une façon connue.

8. Procédé selon la revendication 5, caractérisé en ce que pour le procédé de coulée, ou coule dans les moules un mélange constitué par 100 parties en poids de latex prévulcanisé selon les revendications 1 à 4, calculées sur la teneur en caoutchouc sec pur, jusqu'à 4 parties en poids d'antioxydant, jusqu'à 5 parties en poids de stabilisateurs, 5 à 60 parties en poids de charges, la viscosité est réglée avec de l'eau ou un régulateur de viscosité approprié entre 13 et 40 S avec un bécher de Ford No 4 à 18°C, on le sèche entre 20 et 300°C, on le retire du moule et on le soumet à un traitement subséquent de façon connue.

9. Procédé selon la revendication 5, caractérisé en ce que pour le procédé de pulvérisation, on utilise un mélange constitué par 100 parties en poids de latex prévulcanisé selon les revendications 1 à 4, calculées sur la teneur en caoutchouc sec pur, jusqu'à 5,0 parties en poids de stabilisateurs ionogènes, 0 à 5 parties en poids de stabilisateurs non ionogènes, la teneur en matières sèches étant réglée entre 10 et 60 % avec de l'eau désionisée, et en ce que les produits pulvérisés avec le latex sont séchés entre 20 et 300°C et soumis à un traitement subséquent de façon connue.

10. Procédé selon la revendication 5, caractérisé en ce que pour le procédé de moussage, on fait mousser de façon connue un mélange constitué par 100 parties en poids de latex prévulcanisé selon les revendications 1 à 4, calculées sur la teneur en caoutchouc sec pur, jusqu'à 5 parties en poids de stabilisateurs non ionogènes, de 0,05 à 6 parties en poids de savons, jusqu'à 4 parties en poids d'agent anti-vieillissement, de 0,1 à 15 parties en poids de stabilisateurs de mousse, on le fait sécher entre 20 et 300°C, et en ce que les produits sont soumis à un traitement subséquent de façon connue.

11. Procédé selon la revendication 5, caractérisé en ce que pour la procédé de filage, on utilise un mélange constitué par 100 parties en poids de latex prévulcanisé selon les revendications 1 à 4, calculées sur la teneur en caoutchouc sec pur, jusqu'à 5 parties en poids d'agent anti-vieillissement, jusqu'à 3 parties en poids de stabilisateurs, la teneur en substances sèches étant réglée avec de l'eau entre 30 et 70 %, et on dirige le mélange de latex par un tube capillaire dans un bain de coagulation et on le lave et on le sèche de façon connue.

12. Procédé selon la revendication 5, caractérisé en ce que pour l'enduction, on utilise un mélange constitué par 100 parties en poids de latex prévulcanisé selon les revendications 1 à 4, calculées sur la teneur en caoutchouc sec pur, jusqu'à 4 parties en poids d'antioxydant, de 20 à 300 parties en poids de charges, jusqu'à 20 parties en poids de plastifiant, jusqu'à 15 parties en poids de stabilisateurs ainsi que de l'eau pour régler la teneur en matières sèches, on le sèche entre 20 et 300°C, et en ce que les produits enduits sont soumis à un traitement subséquent de façon connue.